# EUROPÄISCHE PATENTSCHRIFT

(11) **EP 3 185 732 B1**
(45) Veröffentlichungstag und Bekanntmachung des Hinweises auf die Patenterteilung: **31.10.2018**
(21) Anmeldenummer: 15750770.8
(22) Anmeldetag: 19.08.2015
(51) Int. Cl.: A47J 43/07

(54) **MESSERANORDNUNG FÜR EIN KÜCHENGERÄT SOWIE KÜCHENGERÄT MIT EINER MESSERANORDNUNG**
BLADE ASSEMBLY FOR A KITCHEN APPLIANCE AND KITCHEN APPLIANCE HAVING A BLADE ASSEMBLY
ENSEMBLE COUTEAU POUR UN APPAREIL DE CUISINE ET APPAREIL DE CUISINE ÉQUIPÉ D'UN ENSEMBLE COUTEAU

(30) Priorität: 28.08.2014 DE 102014217241
(43) Veröffentlichungstag der Anmeldung: 05.07.2017
(73) Patentinhaber: BSH Hausgeräte GmbH, 81739 München (DE)
(72) Erfinder: STERGAR, David, 3342 Gornji (SI); KOREN, Peter, 3331 Nazarje (SI); JEGRISNIK, Uros, 3313 Polzela (SI); SLAKAN, Gregor, 1420 Trbovlse (SI)
(86) Internationale Anmeldenummer: PCT/EP2015/068986
(87) Internationale Veröffentlichungsnummer: WO 2016/030236

(56) Entgegenhaltungen:
- EP-A1- 2 486 833
- WO-A1-2013/016533
- FR-A- 1 143 272
- GB-A- 747 764
- US-A1- 2002 176 320
- US-A1- 2014 203 123

## Beschreibung

### Gebiet der Erfindung

Die Erfindung betrifft eine Messeranordnung für ein Küchengerät, insbesondere für eine Küchenmaschine oder einen Standmixer, mit einem Kupplungsbereich zum drehfesten Ankuppeln an eine Antriebswelle des Küchengeräts und mit einer Mehrzahl von Messerflügeln, die als Messerflügelpaare paarweise einander gegenüberliegend angeordnet sind und die jeweils mindestens eine in einer Drehrichtung vorne angeordnete Schneide aufweisen. Die Erfindung betrifft auch ein Küchengerät mit einer derartigen Messeranordnung.

### Hintergrund der Erfindung

Küchengeräte zum Zerkleinern eines Bearbeitungsguts, insbesondere elektromotorisch betriebene Küchengeräte wie beispielsweise Küchenmaschinen oder Standmixer, sind allgemein bekannt. Üblicherweise werden solche Küchengeräte zum Zerkleinern von Lebensmitteln, die feste oder harte Bestandteile enthalten oder aus solchen bestehen, verwendet, etwa zum Zerkleinern von Nüssen oder zum Zerhacken von Kräutern. Zum Zerkleinern des Bearbeitungsguts weisen derartige Küchengeräte eine Messeranordnung auf oder können mit einer solchen versehen werden. Die Messeranordnung kann durch eine Antriebswelle des Küchengeräts in eine schnelle Rotation von mehr als 1000 Umdrehungen pro Minute (U/min), typischerweise von etwa 7000 bis 22000 U/min, versetzt werden.

Aus dem Patent US 2,788,038 ist ein Rotor für einen Mischcontainer zum Zerkleinern und Mischen eines Bearbeitungsguts bekannt. Der Rotor umfasst eine zentrale Platte, die eine Öffnung zur Aufnahme einer Antriebswelle aufweist, wobei am Rand der zentralen Platte ein erstes Paar sich radial erstreckender, nach oben abgewinkelter Schneidblätter und ein zweites Paar sich radial erstreckender, nach unten abgewinkelter Schneidblätter ausgebildet sind. Die Schneidblätter sind an ihren führenden Kanten geschärft. Die insgesamt vier Schneidblätter sind in Bezug auf eine Drehachse der Antriebswelle jeweils um 90° gegeneinander versetzt.

Gemäß der internationalen Offenlegungsschrift WO 93/22042 weist ein elektromotorisch betriebenes Mixgerät eine Messeranordnung auf mit einem oberen Messerabschnitt und einem unteren Messerabschnitt mit jeweils zwei einander gegenüberliegenden Messern, wobei der obere Messerabschnitt zwei unterschiedliche Messerformen umfasst. Die Messer des unteren und des oberen Messerabschnitts sind jeweils um 90° gegeneinander versetzt auf der Antriebsachse des Mixgeräts angeordnet.

Die Offenlegungsschrift DE 10 2012 207 711 A1 offenbart ein elektromotorisches Küchengerät zum Zerkleinern von Lebensmitteln, das eine Antriebseinheit aufweist, die einen Messersatz mit einer Drehzahl von mehr als 1000 U/min um eine Rotationsachse antreiben kann. Der Messersatz weist einen oberen, sich in einer ersten Radialebene erstreckenden Messerabschnitt mit einem ersten Messerflügelpaar und einen unteren, sich in einer zweiten, von der ersten Radialebene in Richtung der Rotationsachse beabstandeten Radialebene erstreckenden Messerabschnitt mit einem zweiten Messerflügelpaar auf. Das zweite Messerflügelpaar weist zwei gegenüberliegende und gegensinnig verlaufende, sichelförmige Endabschnitte auf. Der Messersatz ist so ausgebildet, dass er keine dynamische Unwucht in Bezug auf die Rotationsachse aufweist.

Aus GB 650 870 ist ein Schneidkopf zum Schneiden und Mischen bekannt, der drei Messer mit jeweils zwei in Bezug zu einer Rotationsachse des Schneidkopfs einander gegenüberliegenden Flügeln umfasst. Die beiden Flügel eines ersten Messers sind nach oben und die beiden Flügel eines zweiten Messers nach unten abgebogen. Die Flügel des mittleren Messers erstrecken sich horizontal, d.h. rechtwinklig zur Rotationsachse. Das erste und das zweite Messer sind im Wesentlichen in derselben vertikalen, die Rotationsachse einschließenden Ebene angeordnet. Die Flügel des mittleren Messers sind in Bezug auf die Rotationsachse gegenüber denen des ersten bzw. des zweiten Messers um 90° versetzt.

Gemäß DE 10 667 16 besteht ein Messersatz für motorisch angetriebene Schneidvorrichtungen aus drei miteinander verbundenen Messerflügelpaaren, von denen das obere und das untere in der gleichen Vertikalebene liegen, während das mittlere sich in einer demgegenüber um 90° versetzten Ebene erstreckt. Das obere Messerflügelpaar hat einen sich schräg aufwärts nach außen erstreckenden Arm und einen diesem gegenüberliegenden, sich in seinem Fußteil schräg aufwärts und daran anschließend schräg einwärts erstreckenden Arm. Das mittlere Messer hat zwei zur Drehachse spiegelbildlich liegende Arme. Das untere Messerflügelpaar hat zwei in verschiedenen Winkeln nach abwärts ragende Arme.

Die europäische Patentanmeldung EP 2 486 833 A1 beschreibt ein Mischgefäß, das in einer motorisierten Küchenmaschine verwendet wird. Die Gefäßwand des Mischgefäßes umfasst einen zylindrischen oberen Abschnitt und einen kegelstumpfförmigen unteren Abschnitt. Der obere Abschnitt weist eine Längsachse auf, die im Allgemeinen in dem oberen Abschnitt zentriert ist, und eine obere Öffnung, die ein oberes Ende der Gefäßwand bildet. Der untere Abschnitt ist zu einer unteren kreisförmigen Öffnung hin verjüngt, die ein unteres Ende der Gefäßwand festlegt und eine Vielzahl von zusammenhängenden gewölbten Vorsprüngen aufweist, die eine hypozykloide innere Oberfläche innerhalb des unteren Abschnitts bilden. Die untere kreisförmige Öffnung wird von einer abnehmbaren Basis verschlossen, die eine sich nach oben verjüngende Struktur sowie eine vertikale Drehspindel aufweist. Auf der Spindel ist eine Messeranordnung angeordnet. Die Messeranordnung umfasst ein Paar nach oben verlaufender Messerflügel, ein Paar sich radial erstreckender Messerflügel und ein Paar nach unten verlaufender Messerflügel.

In der US-Patentanmeldung US 2002/176320 A1 ist eine Basiseinheit für einen Mixer beschrieben, die mit einem Behälter einer Küchenmaschine, einem Mischerbehälter und einem Getränkebehälter verwendet werden kann. Der Mischerbehälter enthält eine neuartige Messeranordnung, die Messerflügel im Stil einer Küchenmaschine sowie Messerflügel vom Typ eines Mixers aufweist. Programme mit vorprogrammierten Motorbefehlen für gewünschte Operationen werden im Speicher abgelegt und können von einem Benutzer auf einer Benutzeroberfläche ausgewählt werden. Die Benutzerschnittstelle kann eine Flüssigkristallanzeige oder Funktionsschalter und Leuchtdioden umfassen. Bei Auswahl einer bestimmten vordefinierten Funktion ruft der Mikrocontroller das entsprechende Programm aus dem Lesespeicher ab und spezifiziert die vorprogrammierten Motorbefehle, um die gewählte Funktion auszuführen.

Die internationale Patentanmeldung WO 2013/016533 A1 beschreibt ein Mischersystem, das einen Behälter mit einer drehbaren Messeranordnung, einen Deckel, der ein offenes Ende des Behälters abdeckt, und eine Basiseinheit mit einer motorisierten Einheit umfasst. Wenn der Behälter mit der Basiseinheit gekoppelt ist, ist die motorisierte Einheit dazu ausgelegt, die drehbare Messeranordnung anzutreiben. Der Deckel umfasst einen schwenkbaren Henkel, der für die Betätigung der motorisierten Einheit ausgelegt ist. Von dem schwenkbaren Henkel aus erstreckt sich ein Vorsprung durch eine Reihe von Öffnungen und drückt gegen eine im Behälter angeordnete und durch eine Federkraft in Position gehaltene verschiebbare Betätigungsstange, wodurch ein Schalter der motorisierten Einheit gedrückt wird. Eine drehbare Messeranordnung umfasst Schneidmesser und Zerkleinerungselement(e). Die Zerkleinerungsklinge erstreckt sich ausgehend von einer Nabe in Längsrichtung.

Die britische Patentanmeldung GB 747 764 A beschreibt eine Schneid- und/oder Rührvorrichtung, die dazu vorgesehen ist, in der Basis eines Mischbehälters angebracht zu werden. Die Schneid- und/oder Rührvorrichtung besteht aus zwei nach oben geneigten Messerflügeln, zwei in einer gemeinsamen horizontalen Ebene liegenden Messerflügeln und zwei nach unten geneigten Messerflügeln, die alle in gleichen Abständen auf einem Antriebskopf auf einer Antriebsspindel angeordnet sind und durch eine Mutter mit sich nach oben aufweitenden Seiten befestigt sind.

Die französische Patentanmeldung FR 1 143 272 A beschreibt eine Zerkleinerungseinrichtung für als Mixer bekannte rotierende Vorrichtungen, wobei die Zerkleinerungseinrichtung in Form eines Sterns ausgebildet ist, dessen Zacken die Messerflügel der Zerkleinerungsvorrichtung bilden. Dabei können Messerflügel eines Paars von Messerflügel nach oben oder unten gebogen sein, sie können aber auch in derselben Ebene angeordnet und nicht gebogen sein.

Die US-Patentanmeldung US 2014/203123 A1 beschreibt ein multifunktionales Bearbeitungswerkzeug für eine Küchenmaschine. Das Bearbeitungswerkzeug weist eine zentrale Nabe mit einem festen Messerflügel und einem drehbaren Messerflügel auf, die sich von der Nabe nach außen erstrecken. Der drehbare Messerflügel ist bezüglich der Neigung der Klinge zwischen einer im Wesentlichen vertikalen und horizontalen Position verstellbar. Zum Einstellen der Neigung des Messerflügels ist auf einer Basiseinheit der Küchenmaschine eine externe Verstellanordnung angeordnet, wobei die Neigung des Messerflügels eingestellt werden kann, während ein Bearbeitungsvorgang durchgeführt wird. Das einstellbare Bearbeitungswerkzeug ist zwischen einer Einstellung zum Zerkleinern und einer Einstellung zum Rühren konfigurierbar, so dass ein einzelnes Bearbeitungswerkzeug bereitgestellt wird, das für eine Vielzahl von Bearbeitungsfunktionen verwendet werden kann.

Elektromotorisch betriebene Küchengeräte, die mit bekannten Messeranordnungen ausgestattet sind, gestatten in vielen Fällen eine zufriedenstellende Bearbeitung eines zu zerkleinernden Bearbeitungsguts. Dabei ist jedoch in der Regel eine ausreichende Zerkleinerung des Bearbeitungsguts nur bei Rotationsgeschwindigkeiten oberhalb von etwa 10000 U/min erreichbar. Es wäre wünschenswert, auch bei niedrigeren Drehzahlen eine gute Schneid- und Zerkleinerungswirkung erzielen zu können. Ferner ist bei bekannten Messeranordnungen eine gute Schneid- und Zerkleinerungswirkung oft nicht bei unterschiedlichen Mengen und bei unterschiedlichen Größen der zu zerkleinernden festen bzw. harten Bestandteile des Bearbeitungsguts gewährleistet.

### Der Erfindung zugrundeliegende Aufgabe

Es ist Aufgabe der vorliegenden Erfindung, eine Messeranordnung für ein Küchengerät, insbesondere für eine Küchenmaschine oder einen Standmixer, sowie ein mit einer derartigen Messeranordnung ausgestattetes Küchengerät anzugeben, wobei die oben genannten Nachteile möglichst vermieden werden und wobei insbesondere eine gute Schneid- und Zerkleinerungswirkung bereits bei Drehzahlen unterhalb von etwa 10000 U/min erzielbar ist.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch eine Messeranordnung mit den Merkmalen des Anspruchs 1 und durch ein Küchengerät mit den Merkmalen des Anspruchs 11. Eine erfindungsgemäße Messeranordnung für ein Küchengerät, insbesondere für eine Küchenmaschine oder einen Standmixer, weist einen Kupplungsbereich auf, der zum drehfesten Ankuppeln der Messeranordnung an eine Arbeitswelle des Küchengeräts ausgebildet ist. Die Arbeitswelle, die im Folgenden auch als Antriebswelle bezeichnet wird, ist vorzugsweise elektromotorisch antreibbar. Hierfür kann das Küchengerät einen Elektromotor aufweisen, der dazu ausgebildet und mit der Antriebsachse derart verbunden ist, um diese in eine schnelle Rotation zu versetzen, insbesondere in eine Rotation mit mehr als 1000 U/min, vorzugsweise von etwa 7000 U/min. Der Kupplungsbereich der Messeranordnung kann als nicht-kreisförmige Durchgangsöffnung ausgebildet sein, in die die Antriebswelle mit einem komplementär zur Durchgangsöffnung ausgebildeten Abschnitt einsetzbar ist. Die Durchgangsöffnung kann beispielsweise quadratisch ausgebildet sein und die Antriebswelle einen Abschnitt mit einem entsprechenden quadratischen Querschnitt umfassen. Der Kupplungsbereich kann aber auch zum drehfesten Verbinden der Messeranordnung mit der Arbeitswelle in anderer Weise, beispielsweise durch eine Klemm- oder Schraubverbindung, ausgebildet sein.

Weiterhin umfasst die Messeranordnung eine Mehrzahl von Messerflügeln, die bezogen auf die Drehachse der Antriebswelle bzw. auf den Kupplungsbereich paarweise einander gegenüberliegend angeordnet sind und dadurch eine Mehrzahl von Messerflügelpaaren bilden. Die Messerflügel erstrecken sich von der Drehachse der Antriebswelle insbesondere in einer radialen Richtung oder in einer Richtung, die zumindest eine radiale Komponente aufweist. Vorzugsweise bilden jeweils zwei einander gegenüberliegend angeordnete Messerflügel ein zur Drehachse symmetrisches Messerflügelpaar, wodurch auf einfache Weise die Vermeidung einer dynamischen Unwucht und somit ein ruhiger und verschleißarmer Betrieb eines mit der Messeranordnung versehenen Küchengeräts ermöglicht werden.

Die Messerflügel weisen jeweils mindestens eine an einer, bezogen auf eine Drehrichtung der Messeranordnung bzw. der Antriebswelle, vorderen bzw. führenden Seite des Messerflügels angeordnete Messerschneide auf. Wenn die Messeranordnung mit der Antriebswelle des Küchengeräts verbunden ist und vom Motor des Küchengeräts in Rotation versetzt wird, so bewegen sich die an den jeweiligen Vorderseiten der Messerflügel angeordneten Schneiden in einer tangentialen Richtung zur Drehachse der Antriebswelle, wobei die Geschwindigkeit mit dem Radius zunimmt. Die Messerflügel können jeweils einen Tragarm umfassen, an dem die Schneide des jeweiligen Messerflügels befestigt ist. Die Schneide kann aber auch einstückig mit dem jeweiligen Tragarm ausgebildet und beispielsweise durch Anschleifen oder Verformen des betreffenden Tragarms gefertigt sein.

Erfindungsgemäß umfasst die Messeranordnung mindestens drei Messerflügelpaare und somit mindestens sechs Messerflügel, wobei die mindestens drei Messerflügelpaare bzw. die mindestens sechs Messerflügel bezüglich der Drehachse der Antriebswelle bzw. der Messeranordnung gegeneinander versetzt angeordnet sind. Die gegeneinander versetzte Anordnung der Messerflügelpaare bzw. der Messerflügel bedeutet, dass diese sich in einer Projektion auf eine Radialebene, d.h. auf eine senkrecht zur Drehachse stehende Ebene, ausgehend von der Drehachse in unterschiedliche Richtungen erstrecken. Insbesondere können die mindestens sechs Messerflügel jeweils um gleiche Winkel gegeneinander versetzt sein. Vorzugsweise sind die Schneiden der Messerflügel derart angeordnet, dass sich die Schneiden der Messerflügel in der Projektion auf die Radialebene in unterschiedliche Richtungen erstrecken. Dies bedeutet, dass die mindestens drei Messerflügelpaare bzw. die mindestens sechs Messerflügel bzw. deren Schneiden näherungsweise in jeweils unterschiedlichen axialen Halbebenen, die jeweils einseitig durch die Drehachse begrenzt werden, angeordnet sind. Sofern die Messerflügel bzw. die Schneiden gekrümmt sind oder zwar geradlinig, jedoch schräg zu einer radialen Richtung verlaufen, sind zumindest die Radiusvektoren zu einem mittleren oder zu einem radial inneren oder äußeren Endpunkt der jeweiligen Schneide projiziert auf die Radialebene bezüglich der Drehachse gegeneinander versetzt angeordnet.

Erfindungsgemäß ist erkannt worden, dass die Anzahl und die Anordnung der Messerflügel und insbesondere der Schneiden in Bezug auf eine Radialebene einen Einfluss auf die Schneidwirkung der Messeranordnung haben. Dadurch, dass die Messeranordnung mindestens sechs Messerflügel umfasst, die bezüglich der Drehachse gegeneinander versetzt angeordnet sind, kann es insbesondere ermöglicht werden, die Schneid- und Zerkleinerungswirkung bei niedrigen Rotationsgeschwindigkeiten zu verbessern. Insbesondere kann es ermöglicht werden, eine verbesserte Schneidwirkung bei einer Drehzahl von etwa 7000 U/min zu erzielen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Gemäß einer bevorzugten Ausführungsform der Erfindung haben die Schneiden der Messerflügel eines oberen Messerflügelpaars eine kürzere Radialerstreckung als die Schneiden der Messerflügel der übrigen Messerflügelpaare. Die Bezeichnung "oberes Messerflügelpaar" bezieht sich dabei auf eine axiale Position bzw. einen auf die Drehachse bezogen axialen Bereich, in dem die Schneiden der Messerflügel des betreffenden Messerflügelpaars angeordnet sind und sich bei Rotation der Messeranordnung bewegen, wobei die Schneiden der übrigen Messerflügelpaare in axialen Bereichen angeordnet sind, die gegenüber dem Bereich des oberen Messerflügelpaars in derselben axialen Richtung versetzt sind. Insbesondere bezieht sich die Angabe "oben" auf eine vorgegebene Einbaulage der Messeranordnung in dem Küchengerät, wobei die Drehachse senkrecht steht, so dass hierdurch unterschiedliche Höhen, bezogen auf das Küchengerät oder einen Bearbeitungsbehälter, innerhalb dessen die Messeranordnung betrieben wird, definiert sind. Insbesondere ist das obere Messerflügelpaar dasjenige, das von einem Boden des Bearbeitungsbehälters weiter entfernt angeordnet ist als die übrigen Messerflügelpaare. Als Radialerstreckung der Schneiden wird hier der maximale Radius bezeichnet, bis zu dem sich von der Drehachse aus die jeweilige Schneide erstreckt. Das in dem durch diesen Radius definierten Bereich und in dem betreffenden Höhenbereich befindliche Bearbeitungsgut wird somit beim Betrieb der Messeranordnung von der Schneide des betreffenden Messerflügels bearbeitet, insbesondere geschnitten. In bevorzugter Weise sind die Messerflügelpaare symmetrisch ausgebildet, so dass die Schneiden der zwei Messerflügel eines jeden Messerflügelpaares im gleichen axialen bzw. Höhenbereich arbeiten und die gleiche Radialerstreckung haben. Vorzugsweise haben die Schneiden aller Messerflügelpaare, bis auf das obere Messerflügelpaar, etwa gleiche Radialerstreckungen, während die des oberen Messerflügelpaars demgegenüber eine deutlich kürzere Radialerstreckung haben.

Gemäß diesem Aspekt der Erfindung ist erkannt worden, dass neben der Anzahl die Radialerstreckung der Messerflügel und insbesondere der Schneiden einen Einfluss auf die Schneidwirkung der Messeranordnung hat und in überraschender Weise eine besonders wirksame Zerkleinerung erreichbar ist, wenn die Messerflügel bzw. die Schneiden derart unterschiedliche Radialerstreckungen haben, dass die Schneiden der oberen Messerflügel eine kleinere Radialerstreckung als die Schneiden der übrigen Messerflügel haben. Es wird vermutet, dass dies mit der beim Betrieb des Küchengeräts, d.h. bei der Rotation der Messeranordnung, entstehenden Strömung in dem Bearbeitungsgut zusammenhängt, die solche festen oder harten Bestandteile des Bearbeitungsguts, die von den in unteren Höhenbereichen arbeitenden Messerflügeln ungenügend zerkleinert worden sind, in einen radial inneren Teil des oberen Höhenbereichs führt. Dort werden diese von den Schneiden der in diesem Bereich angeordneten Messerflügel weiter zerkleinert. Hierdurch kann es ermöglicht werden, eine besonders hohe Zerkleinerungswirkung bei niedrigen Drehzahlen, beispielsweise bei etwa 7000 U/min, zu erzielen.

Vorzugsweise erstrecken sich die Schneiden des oberen Messerflügelpaars in eine zur Drehachse schräg nach oben gerichtete Richtung. Insbesondere sind die oberen Messerflügel, die die betreffenden Schneiden tragen, von der Drehachse ausgehend aus einer Radialebene nach oben abgewinkelt und somit in der Einbaulage im Küchengerät insbesondere vom Boden des Bearbeitungsbehälters fort gerichtet. In besonders bevorzugter Weise sind die Messerflügel und damit die Schneiden steil nach oben gerichtet, insbesondere um einen Winkel von mehr als ca. 45° nach oben abgewinkelt. Hierdurch wird eine verbesserte Zerkleinerung der beim Betrieb in den oberen Höhenbereich geförderten Bestandteile des Bearbeitungsguts ermöglicht.

In besonders bevorzugter Weise erstrecken sich die Schneiden der Messerflügel des oberen Messerflügelpaars jeweils bis in eine Spitze des Messerflügels, der die betreffende Schneide trägt, hinein. Insbesondere können die oberen Messerflügel näherungsweise als dreieckförmige, nach oben abgewinkelte Flächen ausgebildet sein, die mit einer Dreiecksseite der Drehachse zugewandt sind und wobei die an der vorderen Kante angeordnete Schneide sich bis in die von der Drehachse abgewandte, nach oben ragende Spitze des Dreiecks hinein erstreckt. Hierdurch werden scharfe Spitzen gebildet, die eine besonders effektive Zerkleinerung der in den oberen Höhenbereich gelangenden festen oder harten Bestandteile ermöglichen.

Gemäß einer bevorzugten Ausführungsform der Erfindung umfasst die Messeranordnung genau sechs Messerflügel und somit genau drei Messerflügelpaare, vorzugsweise drei symmetrische Messerflügelpaare. Die sechs Messerflügel können jeweils um etwa 60° gegeneinander versetzt sein. Vorzugsweise weist jeder Messerflügel genau eine an der Vorderseite des betreffenden Messerflügels angeordnete Schneide auf. Hierdurch wird eine Messeranordnung geschaffen, die einerseits einfach aufgebaut und kostengünstig herstellbar ist und andererseits eine besonders wirksame Zerkleinerung des Bearbeitungsguts ermöglicht.

Gemäß einer besonders bevorzugten Ausführungsform der Erfindung umfasst die Messeranordnung ein erstes Messerflügelpaar, bei dem sich die Schneiden beider Messerflügel im Wesentlichen in einer ersten Radialebene, d.h. in einer senkrecht auf der Drehachse stehenden Ebene, erstrecken, ein zweites Messerflügelpaar, dessen Schneiden sich zumindest teilweise in einer zweiten Radialebene erstrecken, die gegenüber der ersten Radialebene in einer axialen Richtung versetzt ist, und ein drittes Messerflügelpaar, dessen Messerflügel Schneiden aufweisen, die sich aus der ersten Radialebene heraus in zur zweiten Radialebene entgegengesetzter Richtung erstrecken. Die erste Radialebene kann insbesondere eine Radialebene sein, in der oder nahe derer der Kupplungsbereich der Messeranordnung angeordnet ist. Die zweite Radialebene kann beispielsweise eine solche Ebene sein, die beim Betrieb des Küchengeräts mit der Messeranordnung in der Nähe eines Bodenbereichs eines Bearbeitungsbehälters angeordnet ist, der das Bearbeitungsgut bei der Bearbeitung mit der Messeranordnung aufnimmt. Die Messerflügel des zweiten Messerflügelpaars sind vorzugsweise derart abgekröpft, dass sie mit ihren radial inneren Abschnitten in oder nahe der ersten Radialebene angeordnet sind und sich mit ihren radial äußeren Abschnitten in der zweiten Radialebene erstrecken. Hierdurch wird eine Bearbeitung des Bearbeitungsguts in drei unterschiedlichen Höhenbereichen ermöglicht, wobei die Möglichkeit geschaffen wird, das Bearbeitungsgut im Bodenbereich des Bearbeitungsbehälters nicht nur zu zerkleinern, sondern auch auszuräumen, so dass das Entstehen von Totzonen, in denen keine Zerkleinerung fester Bestandteile des Bearbeitungsguts stattfindet, sicher vermieden werden kann. Ferner wird eine besonders einfache gestaltete und sicher an die Antriebswelle ankuppelbare Messeranordnung geschaffen. Das dritte Messerflügelpaar ist insbesondere derart ausgebildet, dass die Schneiden eine kürzere Radialerstreckung haben als die des ersten und des zweiten Messerflügelpaars und dass die Schneiden aus der ersten Radialebene heraus in eine schräg zur Drehachse verlaufende, von der zweiten Radialebene fort gerichtete Richtung erstrecken. Insbesondere ist das dritte Messerflügelpaar wie oben beschrieben als das obere Messerflügelpaar ausgebildet. In jeweils besonders vorteilhafter Weise sind das erste, das zweite und/oder das dritte Messerflügelpaar zur Drehachse symmetrische Messerflügelpaare.

Vorzugsweise weisen die Messerflügel des zweiten Messerflügelpaars jeweils eine gekrümmte Schneide auf, insbesondere eine sichelförmig gekrümmte Schneide, während die Messerflügel des ersten und des dritten Messerflügelpaars jeweils mit einer geradlinig verlaufenden Schneide ausgebildet sind. Hierdurch wird eine einfache Ausgestaltung der Messeranordnung mit einer hohen Schneidwirkung geschaffen.

In bevorzugter Weise weist die Messeranordnung eine mehreckige, beispielsweise viereckig oder sechseckig ausgebildete Zentralplatte auf, die den Kupplungsbereich zur drehfesten Verbindung mit der Antriebswelle umfasst, wobei die Messerflügel am äußeren Rand der Zentralplatte ansetzen. Hierdurch wird eine besonders einfache und kostengünstig herstellbare Ausbildung der Messeranordnung ermöglicht.

In besonders vorteilhafter Weise sind mindestens zwei, vorzugsweise vier, weiter vorzugsweise sechs, insbesondere alle Messerflügel einstückig mit der Zentralplatte ausgebildet. In dem Fall, dass jeweils zwei Messerflügel ein symmetrisches Messerflügelpaar bilden, sind insbesondere ein, zwei, drei bzw. alle Messerflügelpaare einstückig mit der Zentralplatte ausgebildet. Hierdurch wird es beispielsweise ermöglicht, dass die Messeranordnung durch Stanzen und gegebenenfalls weitere Umformschritte aus einem plattenförmigen Zwischenprodukt bzw. aus einem Blech hergestellt werden kann.

Vorzugsweise ist mindestens ein Messerflügel mit einem flächigen Bereich ausgebildet, der über mindestens einen gekrümmten, beispielsweise gebogenen oder durch Prägung verformten, Übergangsbereich vorzugsweise einstückig mit der Zentralplatte verbunden ist, wobei der gekrümmte Übergangsbereich durch mindestens eine Verstärkungssicke oder Verstärkungsrippe verstärkt ist. Ein abgewinkelter Messerflügel kann beispielsweise einen einzigen solchen gekrümmten Übergangsbereich aufweisen, ein abgekröpfter Messerflügel zwei, die beide durch Verstärkungssicken oder Verstärkungsrippen verstärkt sein können. Insbesondere sind die Messerflügel eines Messerflügelpaars in symmetrischer Weise mit Verstärkungssicken bzw. -rippen versehen. Alternativ oder zusätzlich können die flächigen Bereiche Verstärkungssicken bzw. -rippen aufweisen. Die Verstärkungssicken können in vorteilhafter Weise durch Prägen hergestellt werden. Dadurch, dass die Biegebereiche der Messerflügel mit Verstärkungssicken oder -rippen verstärkt sind, wird eine Einhaltung der vorgegebenen Geometrie der Messerflügel auch bei hoher Drehzahl ermöglicht. Hierdurch kann die Wirksamkeit der Zerkleinerung weiter gesteigert werden.

Ein erfindungsgemäßes Küchengerät weist einen elektromotorischen Antrieb zum Antrieb einer Antriebswelle mit einer Drehzahl von mindestens etwa 1000 U/min auf. Die Antriebswelle ragt in einem Bearbeitungsraum hinein, in dem ein Bearbeitungsgut angeordnet werden kann. Die Antriebswelle trägt eine Messeranordnung, die wie oben beschrieben ausgebildet ist, und die innerhalb des Bearbeitungsraums angeordnet ist oder angeordnet werden kann. Die Messeranordnung ist drehfest mit der Antriebswelle verbunden und kann über die Antriebswelle in eine schnelle Rotation von mindestens 1000 U/min, beispielsweise 7000 U/min, versetzt werden, um das in dem Bearbeitungsraum befindliche Bearbeitungsgut zu zerkleinern.

Das Küchengerät ist insbesondere als Küchenmaschine oder als Standmixer ausgebildet und weist einen Bearbeitungsbehälter auf, in den die Antriebswelle von oben oder von unten hineinragt und wobei die Antriebswelle die Messeranordnung derart trägt, dass mit dieser in dem Bearbeitungsbehälter befindliches Bearbeitungsgut zerkleinert werden kann. Die Messeranordnung ist vorzugsweise lösbar mit der Antriebswelle verbunden und kann bei Bedarf durch ein anderes Arbeitswerkzeug, beispielsweise ein Rührwerkzeug, ersetzt werden.

### Kurzbeschreibung der Zeichnungen

Weitere vorteilhafte Ausgestaltungen werden nachfolgend an Hand zweier in den Zeichnungen dargestellten Ausführungsbeispiele, auf welche die Erfindung jedoch nicht beschränkt ist, näher beschrieben.

Es zeigen schematisch:
- Fig. 1: eine Messeranordnung gemäß einem ersten Ausführungsbeispiel der Erfindung schräg von oben gesehen;
- Fig. 2: die Messeranordnung der Fig. 1 axial von unten gesehen;
- Fig. 3: die Messeranordnung der Fig. 1 axial von oben gesehen;
- Fig. 4: die Messeranordnung der Fig. 1 in einer Seitenansicht;
- Fig. 5: die Messeranordnung der Fig. 1 in Einbaulage in einem Standmixer, von der Seite gesehen;
und schließlich
- Fig. 6: eine Messeranordnung gemäß einem zweiten Ausführungsbeispiel der Erfindung schräg von oben gesehen.

### Ausführliche Beschreibung anhand von zwei Ausführungsbeispielen

Bei der nachfolgenden Beschreibung zweier bevorzugter Ausführungsformen der vorliegenden Erfindung bezeichnen gleiche Bezugszeichen gleiche oder vergleichbare Komponenten. Der Übersichtlichkeit halber sind nicht in allen Figuren alle Bezugszeichen dargestellt.

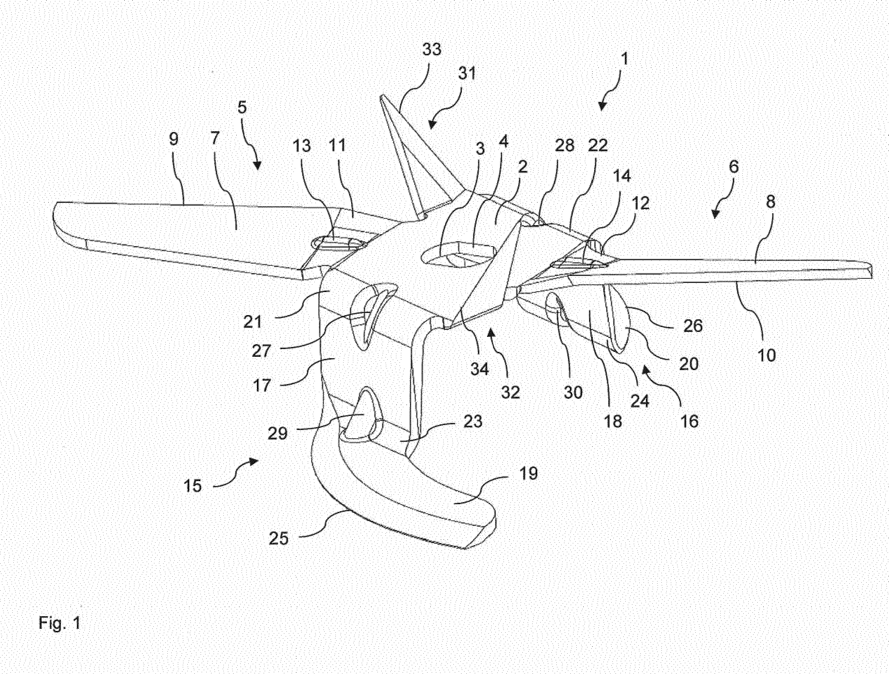

In Fig. 1 ist eine Messeranordnung gemäß einem ersten Ausführungsbeispiel der Erfindung in einer schräg von oben gesehenen Ansicht gezeigt. Die Ausdrücke "oben" und "unten" beziehen sich hier und im Folgenden auf eine Einbaulage in einem Küchengerät, das als Küchenmaschine oder als Standmixer ausgebildet ist, und wobei die Messeranordnung im unteren Bereich eines Bearbeitungsbehälters, der das Bearbeitungsgut aufnimmt, angeordnet werden kann. Die Messeranordnung gemäß dem ersten Ausführungsbeispiel ist als einstückiges Schneidmesser 1 ausgebildet.

Das Schneidmesser 1 umfasst eine im Wesentlichen viereckig ausgebildete Zentralplatte 2, die einen zentralen Durchbruch 3 zum Durchführen einer Antriebswelle des Küchengeräts aufweist. Der Durchbruch 3 ist nicht-kreisförmig ausgebildet und umfasst insbesondere eine Abflachung 4, die mit einer entsprechenden Abflachung der Antriebswelle zusammenwirkt, um die Zentralplatte 2 und damit das Schneidmesser 1 drehfest an der Antriebswelle zu befestigen.

An einander gegenüberliegenden Randbereichen der Zentralplatte setzen die zwei Messerflügel 5, 6 eines ersten Messerflügelpaars an. Die beiden Messerflügel 5, 6 des ersten Messerflügelpaars erstrecken sich im Wesentlichen in derjenigen Radialebene, die durch die Zentralplatte 2 definiert wird. Die Messerflügel 5, 6 weisen jeweils einen flächigen Bereich 7, 8 auf, der an seiner bezogen auf eine Drehrichtung vorderen Kante jeweils eine Schneide 9, 10 trägt. Die Schneiden 9, 10 sind gerade ausgebildet und erstrecken sich im Wesentlichen in der durch die Zentralplatte 2 gebildeten Radialebene, jedoch schräg zu einer auf die Drehachse bezogen radialen Richtung bis zum äußeren Ende der Messerflügel 5, 6. Die Messerflügel 5, 6 sind zu der Radialebene leicht schräg gestellt (geschränkt), so dass das von den Messerflügeln mittels der Schneiden 9, 10 geschnittene Bearbeitungsgut gleichzeitig in einer axialen Richtung gefördert wird. In den gekrümmten Übergangsbereichen 11, 12, mit denen die die Schneiden 9, 10 tragenden flächigen Bereiche 7, 8 der Messerflügel 5, 6 an der Zentralplatte 2 ansetzen, sind Verstärkungssicken 13, 14 vorgesehen, um die Stabilität der Messerflügel 5, 6 zu erhöhen.

Weiterhin setzt an einander gegenüberliegenden Kantenbereichen der Zentralplatte 2 ein zweites Messerflügelpaar mit zwei in axialer Richtung nach unten abgekröpften Messerflügeln 15, 16 an. Die beiden Messerflügel 15, 16 umfassen jeweils einen inneren, axialen Bereich 17, 18 und einen äußeren, flächigen Bereich 19, 20, wobei die axialen Bereiche 17, 18 mit oberen gebogenen Übergangsbereichen 21, 22 an der Zentralplatte 2 ansetzen und über untere gebogene Übergangsbereiche 23, 24 in die flächigen Bereiche 19, 20 übergehen. Die flächigen Bereiche 19, 20 sind gekrümmt und tragen an ihrer in Drehrichtung vorderen Kante jeweils eine Schneide 25, 26. Die Schneiden 25, 26 sind sichelförmig bezüglich der Drehrichtung nach hinten gekrümmt und erstrecken sich nach innen über den unteren Übergangsbereich 23, 24 bis in den axialen Bereich 17, 18 hinein sowie nach außen bis zum Ende der Messerflügel 15, 16. Die flächigen Bereiche 19, 20 sowie die von diesen getragenen Abschnitte der Schneiden 25, 26 erstrecken sich in einer Radialebene, die zu der von der Zentralplatte 2 definierten ersten Radialebene parallel, jedoch in axialer Richtung von dieser beabstandet ist. Die oberen und unteren gebogenen Übergangsbereiche 21, 22, 23, 24 sind jeweils durch geprägte Verstärkungssicken 27, 28, 29, 30 verstärkt.

An weiteren, einander gegenüberliegenden Bereichen des äußeren Rands der Zentralplatte 2 setzen die beiden Messerflügel 31, 32 des dritten Messerflügelpaares an. Im dargestellten Ausführungsbeispiel ist die Zentralplatte 2 im Wesentlichen viereckig gestaltet, wobei jeweils ein Messerflügel 5, 6 des ersten Messerflügelpaares neben einem Messerflügel 31, 32 des dritten Messerflügelpaares an einer Kante der im Wesentlichen viereckigen Zentralplatte 2 ansetzt. Die Messerflügel 15, 16 des zweiten Messerflügelpaares setzen an den beiden übrigen Kanten der Zentralplatte 2 an. Wie in Fig. 1 dargestellt, sind die Messerflügel 31, 32 des dritten Messerflügelpaares im Wesentlichen dreieckig ausgebildet und an ihrer jeweiligen in Drehrichtung vorderen Kante mit einer Schneide 33, 34 versehen. Wie in Fig. 1 ebenfalls angedeutet, sind die Messerflügel 31, 32 des dritten Messerflügelpaares aus der Radialebene der Zentralplatte 2 heraustretend nach oben abgewinkelt, so dass die Schneiden 33, 34 sich schräg nach außen in einer zur Drehachse windschiefen Richtung erstrecken. Die Schneiden 33, 34 des dritten Messerflügelpaares sind jeweils gerade ausgebildet, jedoch deutlich kürzer als die Schneiden 9, 10 des ersten Messerflügelpaares und die Schneiden 25, 26 des zweiten Messerflügelpaares. Die Schneiden 33, 34 reichen bis zum Ende des jeweiligen Messerflügels 31, 32 und bilden dort eine scharfe, schräg nach oben gerichtete Spitze.

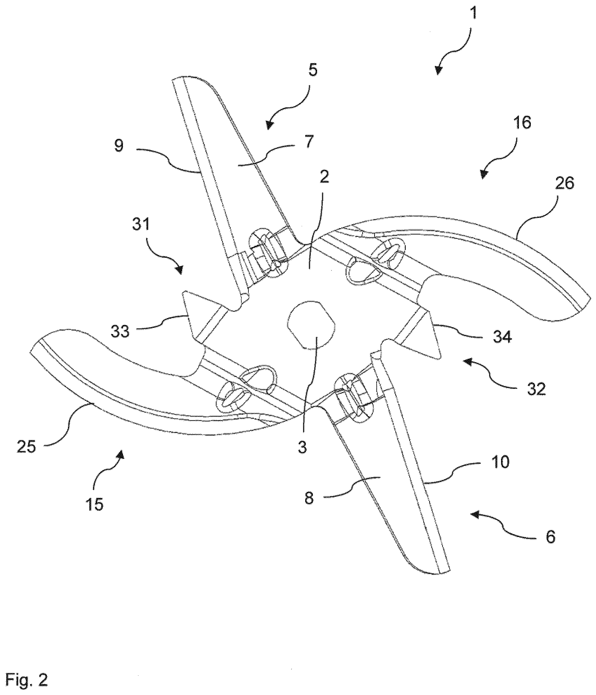

Die in Fig. 1 in einer schräg von oben gesehenen Ansicht dargestellte Messeranordnung 1 ist in Fig. 2 in axialer Richtung von unten gesehen gezeigt. Die Drehachse der Antriebswelle, die in den Durchbruch 3 der Zentralplatte 2 eingesetzt werden kann, verläuft in der Darstellung der Fig. 2 senkrecht zur Ebene der Zeichnung und tritt in der Mitte des Durchbruchs 3 durch die Zeichnungsebene hindurch. In Fig. 2 ist deutlich erkennbar, dass die Messerflügel 5, 6 des ersten Messerflügelpaares bezüglich der Drehachse symmetrisch ausgebildet sind und dementsprechend die Schneiden 9, 10 an entgegengesetzten Seiten, die bei Drehung in der vorgegebenen Drehrichtung vorangehen, tragen. Ebenso sind die Messerflügel 15, 16 des zweiten Messerflügelpaares sowie die Messerflügel 31, 32 des dritten Messerflügelpaares jeweils symmetrisch zur Drehachse ausgebildet. Wie in Fig. 2 zu erkennen ist, sind die Schneiden 9, 10 des ersten sowie die Schneiden 33, 34 des dritten Messerflügelpaares jeweils gerade ausgebildet. Die Schneiden 25, 26 des zweiten Messerflügelpaares sind dagegen sichelförmig gekrümmt. Der von den Messerflügeln 5, 6 des ersten Messerflügelpaares überstrichene Radialbereich ist etwa gleich groß wie der von den Messerflügeln 15, 16 des zweiten Messerflügelpaares überstrichene Radialbereich, während der Radialbereich, der von den Messerflügeln 31, 32 des dritten Messerflügelpaares überstrichen wird, demgegenüber deutlich kleiner ist.

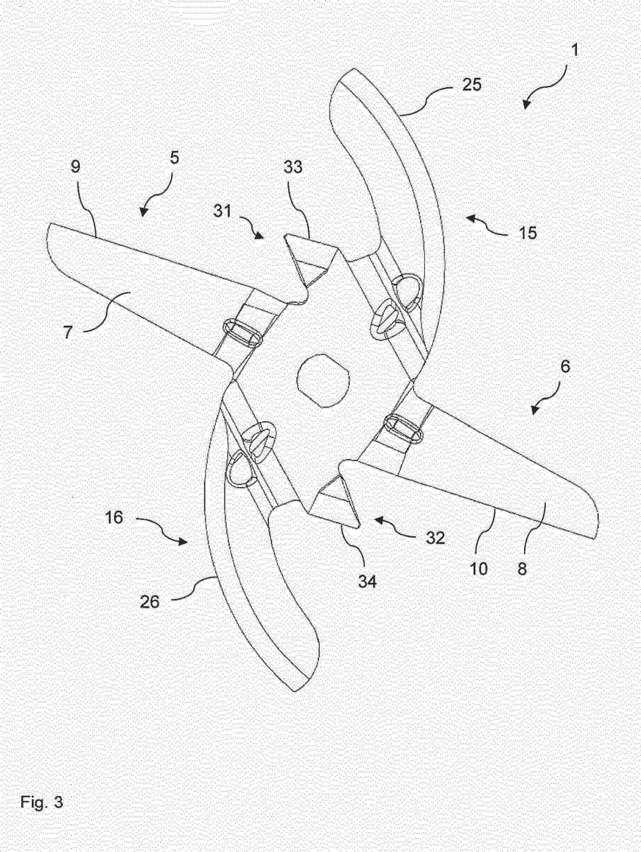

In der in Fig. 3 gezeigten Ansicht in axialer Richtung von oben ist die symmetrische Ausbildung der Messerflügelpaare wie in Fig. 2 zu erkennen. Wie aus dem Vergleich der Figuren 2 und 3 erkennbar ist, sind die Schneiden 9, 10 des ersten Messerflügelpaares durch Anschrägung der flächigen Bereiche 7, 8 an ihrer Unterseite gebildet. Zusammen mit der in Fig. 1 erkennbaren Schrägstellung der flächigen Bereiche 7, 8 wird hierdurch das Bearbeitungsgut aus der ersten Radialebene, in der sich die Messerflügel 5, 6 des ersten Messerflügelpaares und die Zentralplatte 2 befinden, nach unten, d.h. in Richtung auf die zweite Radialebene, in der sich die flächigen Bereiche 19, 20 des zweiten Messerflügelpaares erstrecken, gefördert. Die Schneiden 33, 34 der Messerflügel 31, 32 des dritten Messerflügelpaares sind durch Anschrägung der Ober- bzw. Innenseite der Messerflügel 31, 32 gebildet. Die Schneiden 25, 26 der Messerflügel 15, 16 des zweiten Messerflügelpaares sind nahe der unteren Fläche der flächigen Bereiche 19, 20 ausgebildet, so dass durch die diese bildenden, oberhalb der Schneiden 25, 26 liegenden Anschrägungen beim Schneiden des Bearbeitungsguts dieses nach oben gefördert wird.

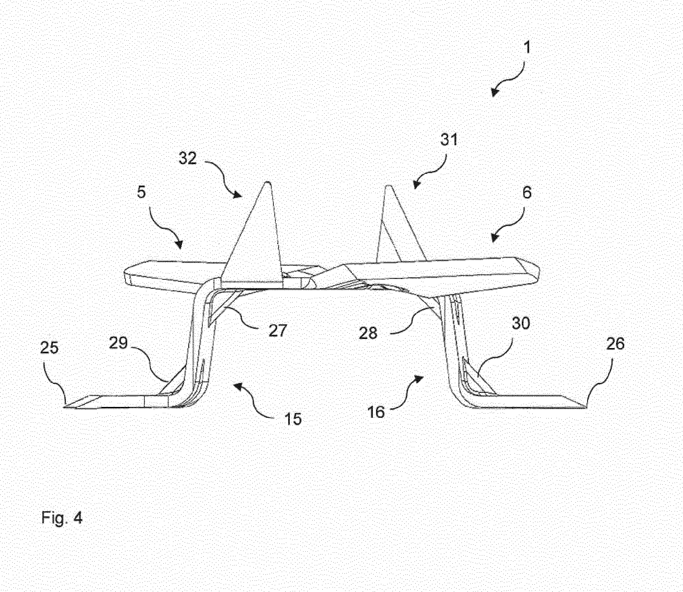

In der Seitenansicht der Fig. 4 ist die abgekröpfte Ausbildung der Messerflügel 15, 16 des zweiten Messerflügelpaares sowie die Ausbildung der geprägten Verstärkungssicken 27, 28, 29, 30 besonders deutlich erkennbar. Die Messerschneiden 25, 26 sind im unteren Bereich der flächigen Bereiche 19, 20 der Messerflügel 15, 16 des zweiten Messerflügelpaares ausgebildet. Hierdurch entsteht bei der Rotation des Schneidmessers 1 eine Aufwärtsbewegung des Bearbeitungsguts in Richtung zur ersten Radialebene.

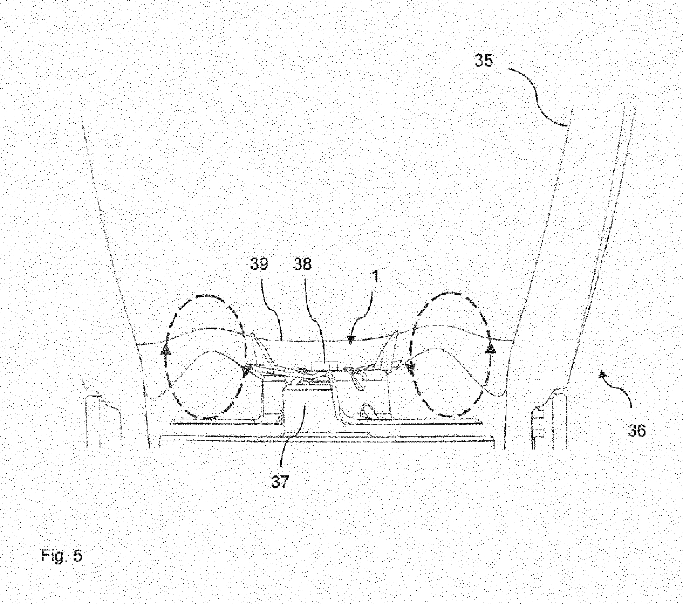

In Fig. 5 ist das Schneidmesser 1 in einem Bearbeitungsbehälter 35 eines ausschnittsweise dargestellten Küchengeräts 36 gezeigt. Das Schneidmesser 1 ist auf einen Kupplungsbereich 37 des Küchengeräts 36, der in den Bearbeitungsbehälter 35 hineinragt und aus dem die Antriebswelle des Küchengeräts 36 nach oben hervorsteht, aufgesetzt. Die in Fig. 5 nicht erkennbare Antriebswelle ist durch den Durchbruch 3 der Zentralplatte 2 hindurchgeführt (s. etwa Fig. 1); das Schneidmesser 1 ist mit einer auf die Antriebswelle aufgesetzten Schraube 38 drehfest mit der Antriebswelle verbunden. Bei Rotation des Schneidmessers 1 bewegen sich die Messerflügel 5, 6, 15, 16, 31, 32 innerhalb des Bearbeitungsbehälters 35, so dass die von diesen getragenen Schneiden 9, 10, 25, 26, 33, 34 das Bearbeitungsgut, das in den Bearbeitungsbehälter 35 aufgenommen ist, zerkleinern. Durch die oben beschriebene Ausbildung der Schneiden sowie durch die Schrägstellung der flächigen Bereiche 7, 8 der Messerflügel 5, 6 des ersten Messerflügelpaares entsteht im Bearbeitungsgut eine Strömung, die in Fig. 5 durch die Pfeile angedeutet ist. Diese Strömung führt das Bearbeitungsgut, das von den Schneiden 9, 10 des ersten Messerflügelpaares geschnitten worden ist, zum zweiten Messerflügelpaar, wo es von den Schneiden 25, 26 weiter zerkleinert wird. Von dort wird das Bearbeitungsgut aus dem unteren Bereich des Bearbeitungsbehälters 35 nach außen und nach oben gefördert und gelangt schließlich in den Bereich der Schneiden 33, 34 des dritten Messerflügelpaares, wo eine weitere Zerkleinerung stattfindet. Auf diese Weise kann nicht nur erreicht werden, dass unterschiedliche Mengen des in dem Bearbeitungsbehälter 35 aufgenommenen Bearbeitungsguts 39 zerkleinert werden können, sondern auch, dass sowohl kleine wie auch große feste oder harte Bestandteile, die in dem Bearbeitungsgut enthalten sind, wirkungsvoll zerkleinert werden können.

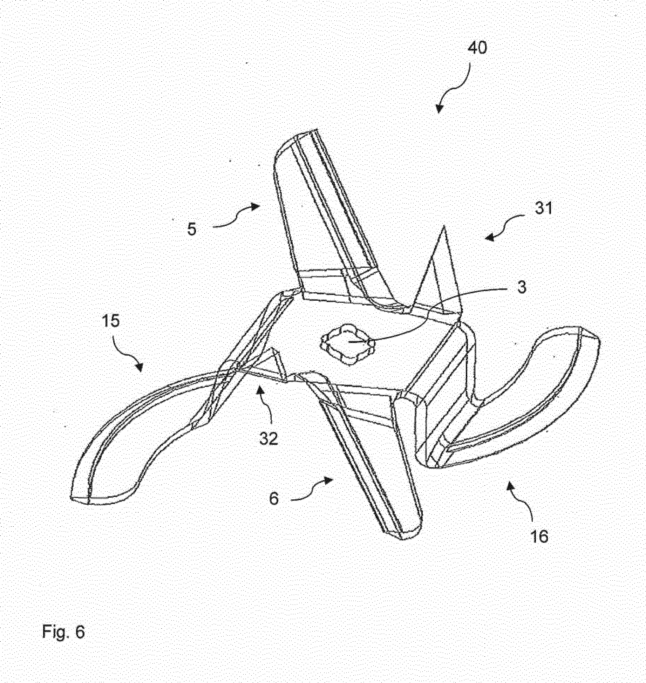

Eine weitere Ausführungsform einer erfindungsgemäßen Messeranordnung, die als einstückiges Schneidmesser 40 ausgebildet ist, ist in Fig. 6 in einer ähnlichen Darstellung wie in Fig. 1 gezeigt. Im Unterschied zu dem in den Figuren 1 bis 5 gezeigten Schneidmesser 1 weist das in Fig. 6 dargestellte Schneidmesser 40 keine Verstärkungssicken auf. Ferner sind die Schneiden des zweiten Messerflügelpaares nicht in die axialen Bereiche der Messerflügel hineingezogen. Der Durchbruch 3 zum Ankuppeln an die Antriebswelle ist quadratisch geformt. Im Übrigen ist das Schneidmesser 40 gemäß Fig. 6 wie zuvor beschrieben ausgebildet.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Schneidmesser
- 2: Zentralplatte
- 3: Durchbruch
- 4: Abflachung
- 5: Messerflügel
- 6: Messerflügel
- 7: Flächiger Bereich
- 8: Flächiger Bereich
- 9: Schneide
- 10: Schneide
- 11: Übergangsbereich
- 12: Übergangsbereich
- 13: Verstärkungssicke
- 14: Verstärkungssicke
- 15: Messerflügel
- 16: Messerflügel
- 17: Axialer Bereich
- 18: Axialer Bereich
- 19: Flächiger Bereich
- 20: Flächiger Bereich
- 21: Übergangsbereich
- 22: Übergangsbereich
- 23: Übergangsbereich
- 24: Übergangsbereich
- 25: Schneide
- 26: Schneide
- 27: Verstärkungssicke
- 28: Verstärkungssicke
- 29: Verstärkungssicke
- 30: Verstärkungssicke
- 31: Messerflügel
- 32: Messerflügel
- 33: Schneide
- 34: Schneide
- 35: Bearbeitungsbehälter
- 36: Küchengerät
- 37: Kupplungsbereich
- 38: Schraube
- 39: Bearbeitungsgut
- 40: Schneidmesser

## Patentansprüche

1. Messeranordnung für ein Küchengerät (36), insbesondere für eine Küchenmaschine oder einen Standmixer,
mit einem Kupplungsbereich zum drehfesten Ankuppeln an eine Antriebswelle des Küchengeräts (36) und mit einer Mehrzahl von Messerflügeln (5, 6, 15, 16, 31, 32), die als Messerflügelpaare paarweise einander gegenüberliegend angeordnet sind und die jeweils mindestens eine in einer Drehrichtung vorne angeordnete Schneide (9, 10, 25, 26, 33, 34) aufweisen,
wobei die Messeranordnung mindestens sechs Messerflügel (5, 6, 15, 16, 31, 32) umfasst, die bezüglich der Drehachse gegeneinander versetzt angeordnet sind, wobei die Messeranordnung
ein erstes Messerflügelpaar mit zwei Messerflügeln (5, 6) umfasst, die sich im Wesentlichen in einer ersten Radialebene erstrecken,
ein zweites Messerflügelpaar mit zwei Messerflügeln (15, 16) umfasst, und
ein drittes Messerflügelpaar mit zwei Messerflügeln (31, 32) umfasst, deren Schneiden (33, 34) sich jeweils in eine zur Drehachse schräg nach oben gerichtete Richtung erstrecken, wobei die Schneiden (33, 34) der Messerflügel (31, 32) des dritten Messerflügelpaars eine kürzere Radialerstreckung haben als die Schneiden (9, 10) der Messerflügel (5, 6) des ersten Messerflügelpaars,
**dadurch gekennzeichnet, dass**
die Messerflügel (5, 6) des ersten Messerflügelpaars zur ersten Radialebene schräg gestellt sind.

2. Messeranordnung nach Anspruch 1, **dadurch gekennzeichnet, dass** die Schneiden (33, 34) der Messerflügel (31, 32) des dritten Messerflügelpaars eine kürzere Radialerstreckung haben als die Schneiden (9, 10, 25, 26) der Messerflügel (5, 6, 15, 16) der übrigen Messerflügelpaare.

3. Messeranordnung nach Anspruch 2, **dadurch gekennzeichnet, dass** die Schneiden (33, 34) der Messerflügel (31, 32) des dritten Messerflügelpaars sich bis in eine Spitze des jeweiligen Messerflügels (31, 32) erstrecken.

4. Messeranordnung nach einem der vorherigen Ansprüche, **dadurch gekennzeichnet, dass** die Messeranordnung genau sechs Messerflügel (5, 6, 15, 16, 31, 32) umfasst.

5. Messeranordnung nach Anspruch 4, **dadurch gekennzeichnet, dass** die Messeranordnung das erste Messerflügelpaar mit zwei Messerflügeln (5, 6), die jeweils mindestens eine sich im Wesentlichen in der ersten Radialebene erstreckende Schneide (9, 10) aufweisen, das zweite Messerflügelpaar mit zwei Messerflügeln (15, 16), die jeweils mindestens eine sich im Wesentlichen in einer zweiten Radialebene erstreckende Schneide (25, 26) aufweisen, wobei die zweite gegenüber der ersten Radialebene in einer axialen Richtung versetzt ist, und das dritte Messerflügelpaar mit zwei Messerflügeln (31, 32), die jeweils mindestens eine sich aus der ersten Radialebene heraus in zur zweiten Radialebene entgegengesetzter Richtung erstreckende Schneide (33, 34) aufweisen, umfasst.

6. Messeranordnung nach Anspruch 5, **dadurch gekennzeichnet, dass** die Schneiden (25, 26) der Messerflügel (15, 16) des zweiten Messerflügelpaars gekrümmt und die Schneiden (9, 10, 33, 34) der Messerflügel (5, 6, 31, 32) des ersten und des dritten Messerflügelpaars gerade ausgebildet sind.

7. Messeranordnung nach einem der vorherigen Ansprüche, **dadurch gekennzeichnet, dass** die Messeranordnung eine Zentralplatte (2) aufweist, die den Kupplungsbereich umfasst, wobei die Messerflügel (5, 6, 15, 16, 31, 32) am Rand der Zentralplatte (2) ansetzen.

8. Messeranordnung nach dem vorherigen Anspruch, **dadurch gekennzeichnet, dass** mindestens zwei Messerflügel (5, 6, 15, 16, 31, 32), insbesondere alle Messerflügel (5, 6, 15, 16, 31, 32), einstückig mit der Zentralplatte (2) ausgebildet sind.

9. Messeranordnung nach einem der vorherigen Ansprüche, **dadurch gekennzeichnet, dass** mindestens ein Messerflügel (5, 6, 15, 16) einen flächigen Bereich (7, 8, 19, 20) aufweist, der über mindestens einen gekrümmten Übergangsbereich (11, 12, 21, 22, 23, 24) mit der Zentralplatte (2) verbunden ist, wobei der Übergangsbereich (11, 12, 21, 22, 23, 24) durch mindestens eine Verstärkungssicke (13, 14, 27, 28, 29, 30) oder -rippe verstärkt ist.

10. Küchengerät, insbesondere Küchenmaschine oder Standmixer, mit einer Messeranordnung nach einem der vorherigen Ansprüche.

## Claims

1. Blade assembly for a kitchen appliance (36), in particular for a food processor or a blender,
having a coupling region for rotationally fixed coupling to a drive shaft of the kitchen appliance (36) and having a plurality of knife blades (5, 6, 15, 16, 31, 32) which are arranged as pairs of knife blades in pairs opposite one another and which each have at least one cutting edge (9, 10, 25, 26, 33, 34) arranged forward in a rotational direction, wherein the blade assembly comprises at least six knife blades (5, 6, 15, 16, 31, 32) which are arranged offset from one another with respect to the axis of rotation,
wherein the blade assembly comprises
a first pair of knife blades having two knife blades (5, 6), which extend essentially in a first radial plane,
a second pair of knife blades having two knife blades (15, 16), and
a third pair of knife blades having two knife blades (31, 32), the cutting edges (33, 34) of which each extend in a direction upwardly aligned obliquely to the axis of rotation, wherein the cutting edges (33, 34) of the knife blades (31, 32) of the third pair of knife blades have a shorter radial extension than the cutting edges (9, 10) of the knife blades (5, 6) of the first pair of knife blades,
**characterised in that**
the knife blades (5, 6) of the first pair of knife blades are positioned obliquely to the first radial plane.

2. Blade assembly according to claim 1, **characterised in that** the cutting edges (33, 34) of the knife blades (31, 32) of the third pair of knife blades have a shorter radial extension than the cutting edges (9, 10, 25, 26) of the knife blades (5, 6, 15, 16) of the other pairs of knife blades.

3. Blade assembly according to claim 2, **characterised in that** the cutting edges (33, 34) of the knife blades (31, 32) of the third pair of knife blades extend into a tip of the respective knife blade (31, 32).

4. Blade assembly according to one of the preceding claims, **characterised in that** the blade assembly comprises exactly six knife blades (5, 6, 15, 16, 31, 32).

5. Blade assembly according to claim 4, **characterised in that** the blade assembly comprises the first pair of knife blades having two knife blades (5, 6) which each have at least one cutting edge (9, 10) extending essentially in the first radial plane, the second pair of knife blades having two knife blades (15, 16) which each have at least one cutting edge (25, 26) essentially extending in a second radial plane, wherein the second radial plane is offset in an axial direction compared to the first radial plane, and the third pair of knife blades having two knife blades (31, 32) which each have at least one cutting edge (33, 34) extending out of the first radial plane in a direction opposite to the second radial plane.

6. Blade assembly according to claim 5, **characterised in that** the cutting edges (25, 26) of the knife blades (15, 16) of the second pair of knife blades are designed to be curved and the cutting edges (9, 10, 33, 34) of the knife blades (5, 6, 31, 32) of the first and the third pairs of knife blades are designed to be straight.

7. Blade assembly according to one of the preceding claims, **characterised in that** the blade assembly has a central plate (2) which comprises the coupling region, wherein the knife blades (5, 6, 15, 16, 31, 32) start at the edge of the central plate (2).

8. Blade assembly according to the preceding claim, **characterised in that** at least two knife blades (5, 6, 15, 16, 31, 32), in particular all knife blades (5, 6, 15, 16, 31, 32) are integrally formed with the central plate (2).

9. Blade assembly according to one of the preceding claims, **characterised in that** at least one knife blade (5, 6, 15, 16) has a planar region (7, 8, 19, 20) which is connected to the central plate (2) via at least one curved transition region (11, 12, 21, 22, 23, 24), wherein the transition region (11, 12, 21, 22, 23, 24) is reinforced by at least one reinforcing bead (13, 14, 27, 28, 29, 30) or rib.

10. Kitchen appliance, in particular food processor or blender, having a blade assembly according to one of the preceding claims.

## Revendications

1. Agencement de couteau pour un appareil de cuisine (36), en particulier pour un robot de cuisine ou un mixeur sur socle,
avec une région de couplage destinée à un couplage fixe au niveau d'un arbre d'entrainement de l'appareil de cuisine (36) et avec une pluralité de pales formant couteau (5, 6, 15, 16, 31, 32), qui sont agencées opposées en tant que forme de paire de pales formant couteau et qui présentent respectivement au moins une arête de coupe (9, 10, 25, 26, 33, 34) agencée vers l'avant dans une direction de rotation,
dans lequel l'agencement de couteau comprend au moins six pales formant couteau (5, 6, 15, 16, 31, 32) qui sont agencées décalées l'une par rapport à l'autre de part et d'autre de l'axe de rotation,
dans lequel l'agencement de couteau comprend
une première paire de pales formant couteau comprenant deux pales formant couteau (5, 6) qui s'étendent essentiellement dans un premier plan radial,
une deuxième paire de pales formant couteau comprenant deux pales formant couteau (15, 16), et
une troisième paire de pales formant couteau comprenant deux pales formant couteau (31, 32) dont les arêtes de coupe (33, 34) s'étendent respectivement dans une direction orientée diagonalement vers le haut par rapport à l'axe de rotation, dans lequel les arêtes de coupe (33, 34) des pales formant couteau (31, 32) de la troisième paire de pales formant couteau présentent une extension radiale plus courte que celle des arêtes de coupe (9, 10) des pales formant couteau (5, 6) de la première paire de pales formant couteau,
**caractérisé en ce que** les pales formant couteau (5, 6) de la première paire de pales formant couteau sont placées en diagonale par rapport au premier plan radial.

2. Agencement de couteau selon la revendication 1, **caractérisé en ce que** les arêtes de coupe (33, 34) des pales formant couteau (31, 32) de la troisième paire de pales formant couteau présentent une extension radiale plus courte que les arêtes de coupe (9, 10, 25, 26) des pales formant couteau (5, 6, 15, 16) des paires de pales formant couteau restantes.

3. Agencement de couteau selon la revendication 2, **caractérisé en ce que** les arêtes de coupe (33, 34) des pales formant couteau (31, 32) de la troisième paire de pales formant couteau s'étendent jusque dans une pointe de la pale formant couteau (31, 32) respective.

4. Agencement de couteau selon l'une quelconque des revendications précédentes, **caractérisé en ce que** l'agencement de couteau comprend exactement six pales formant couteau (5, 6, 15, 16, 31, 32).

5. Agencement de couteau selon la revendication 4, **caractérisé en ce que** l'agencement de couteau comprend la première paire de pales formant couteau comprenant deux pales formant couteau (5, 6) qui présentent respectivement au moins une arête de coupe (9, 10) s'étendant essentiellement dans le premier plan radial, la deuxième paire de pales formant couteau comprenant deux pales formant couteau (15, 16) qui présentent respectivement au moins une arête de coupe (25, 26) s'étendant essentiellement dans un deuxième plan radial, dans lequel ledit deuxième plan est décalé dans une direction axiale par rapport au premier plan radial, et la troisième paire de pales formant couteau comprenant deux pales formant couteau (31, 32) qui présentent respectivement au moins une arête de coupe (33, 34) s'étendant hors du premier plan radial dans une direction opposée au deuxième plan radial.

6. Agencement de couteau selon la revendication 5, **caractérisé en ce que** les arêtes de coupe (25, 26) des pales formant couteau (15, 16) de la deuxième paire de pales formant couteau sont réalisées recourbées et les arêtes de coupe (9, 10, 33, 34) des pales formant couteau (5, 6, 31, 32) des première et troisième paires de pales formant couteau sont réalisées droite.

7. Agencement de couteau selon l'une quelconque des revendications précédentes, **caractérisé en ce que** l'agencement de couteau présente une plaque centrale (2) qui comprend la région de couplage, dans lequel les pales formant couteau (5, 6, 15, 16, 31, 32) sont mises en place au niveau du bord de la plaque centrale (2).

8. Agencement de couteau selon la revendication précédente, **caractérisé en ce qu'**au moins deux pales formant couteau (5, 6, 15, 16, 31, 32), en particulier toutes les pales formant couteau (5, 6, 15, 16, 31, 32) sont réalisées d'un seul tenant avec la plaque centrale (2).

9. Agencement de couteau selon l'une quelconque des revendications précédentes, **caractérisé en ce qu'**au moins une pale formant couteau (5, 6, 15, 16) présente une région plate (7, 8, 19, 20) qui est reliée à la plaque centrale (2) par l'intermédiaire d'au moins une région de transition (11, 12, 21, 22, 23, 24) recourbée, dans lequel la région de transition (11, 12, 21, 22, 23, 24) est renforcée grâce à au moins une côte ou une nervure de renforcement (13, 14, 27, 28, 29, 30).

10. Appareil de cuisine, en particulier robot de cuisine ou mixeur sur socle, comprenant un agencement de couteau selon l'une quelconque des revendications précédentes.
